# EUROPEAN PATENT APPLICATION

(11) **EP 2 378 175 A1**
(43) Date of publication of application: **19.10.2011**
(21) Application number: 09833433.7
(22) Date of filing: 15.12.2009
(51) Int. Cl.: F16L 11/11, B32B 1/08

(54) **FLEXIBLE, PRESSURE-RESISTANT AND OIL-RESISTANT HOSE**

(30) Priority: 17.12.2008 JP 2008321489
(71) Applicant: Kanaflex Corporation Inc., Osaka 530-6017 (JP)
(72) Inventor: KANAO Shigeki, Nishinomiya-shi Hyogo 662-0002 (JP)
(74) Representative: Vossius & Partner
(86) International application number: PCT/JP2009/070906
(87) International publication number: WO 2010/071130

(57) **Abstract**

A flexible, pressure-resistant and oil-resistant hose having excellent durability and pressure-resistant properties, light in weight, and low in cost. A flexible, pressure-resistant and oil-resistant hose provided with a soft body section (2) having a substantially flat inner surface, and also with a helical hard core material section (3) provided on the outer surface of or within the soft body section (2) so as to reinforce the soft body section (2), wherein the soft body section (2) consists of an oil-resistant thermoplastic elastomer. The flexible, pressure-resistant and oil-resistant hose can also be configured as follows, for example: a mesh-like section (4) consisting of a large number of reinforcing threads is provided within the soft body section (2) and the hard core material section (3) is helically provided to the outer surface of the soft body section (2); or the hard core material section (3) particularly is constructed from a metal wire, the hard core material section (3) is provided to the outer surface of the soft body section (2), and an outer coating layer (6) consisting of a wear-resistant thermoplastic elastomer is provided to the outer surface side of the hard core material section (3); or the hard core material section (3) is provided within the soft body section (2) and an inner coating layer (7) consisting of an oil-resistant thermoplastic elastomer is provided to the soft body section (2) so as to cover the inner surface thereof.

## Description

### Technical Field

The present invention relates to a flexible pressure-resistant and oil-resistant hose favorably light and cost-effective and also superior in durability.

### Background Art

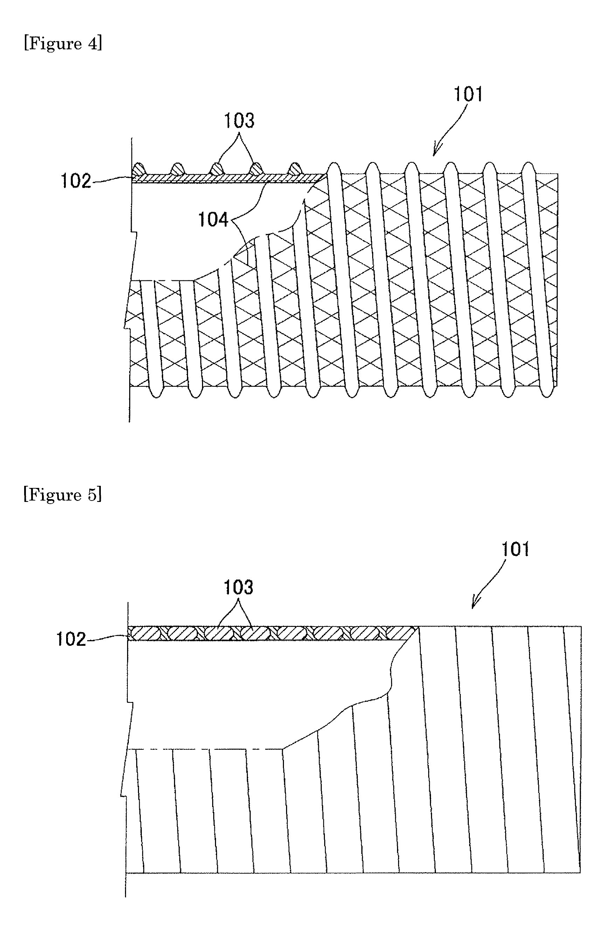

Flexible pressure-resistant hoses 101, comprising, as shown in Figure 4, a tube-shaped soft main body section 102 having a substantially flat internal surface 102 and a helical hard core-material section 103 partially or entirely embedded in the main body section 102 for reinforcement of the main body section, wherein the hard core-material section 103 contains a hard polypropylene as its principal component and a hard polyethylene or the like added thereto, and the main body section 102 contains an olefinic elastomer and an EVA resin mixed therewith have been provided and used as a flexible hose for guiding a gas, liquid or powder, such as hoses for guiding granule or powder and those feeding and guiding muddy water and liquids for foods (see, for example, Patent Document 1).

Flexible pressure-resistant hoses 101, comprising, as shown in Figure 5, a main body section 102 having an almost flat internal surface and a herical hard core-material section 103 partially or entirely embedded in the main body section 102 for reinforcement of the main body section 102, wherein the hard core-material section 103 is made of a hard polypropylene and the main body section 102 contains an olefinic thermoplastic elastomer, an EVA resin, and polypropylene mixed therein, have been provided as flexible pressure-resistant hoses improved in adhesiveness between the main body section and the hard core-material section and having sufficiently high flattening resistance (see, for example, Patent Document 2). It is possible, by adding an EVA resin to the main body section 102, to improve the fluidity of the resin in the molten state, which is advantageous for molding (production), and also to improve the flexibility further. In addition, by forming a hose mostly flat externally, it is possible to prevent deposition of dust and make it easier to wipe the outer surface.

These flexible pressure-resistant hoses were not oil-resistant on the internal surface and thus, could not be used for supply of oily fluids such as waste oil and kerosene. The flexible pressure-resistant and oil-resistant hoses in the structure allowing high-pressure transport of crude oil or heavy oil, which are produced by integrally bonding an external peripheral-wall section made of a soft resin material such as soft vinyl chloride or the like to an internal peripheral-wall section made of a rubber material and fixing a hard core-material section such as of hard vinyl chloride to the external peripheral-wall section made of a soft resin in the state not adhered to the internal peripheral-wall rubber section were proposed as the flexible pressure-resistant and oil-resistant hoses that have also oil resistance (see, for example, Patent Document 3). However, such an internal peripheral-wall section made of rubber and the external peripheral-wall section made of a synthetic resin are less compatible with and thus less adhesive to each other, causing problems in pressure resistance and durability.

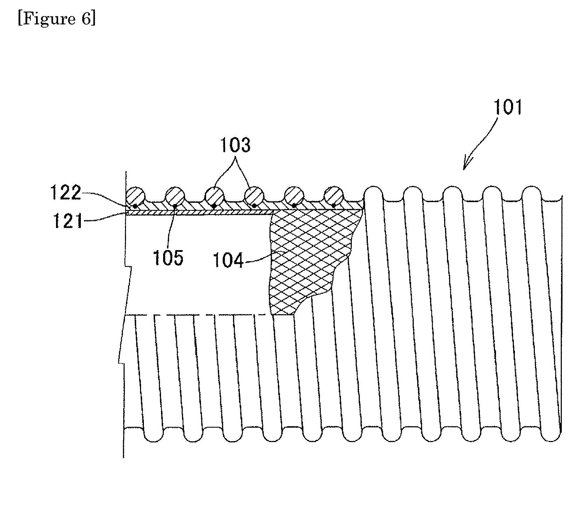

Thus, conventional flexible pressure-resistant and oil-resistant hoses that are prepared by bonding an external peripheral-wall section 122 made of a weather-resistant and oil-resistant rubber material to an internal peripheral-wall section 121 made of an oil-resistant rubber material via a mesh-like section 104 of a reinforcing code, and
placing a hard core-material section 103 made of a hard synthetic resin such as hard vinyl chloride around the outer surface of the external peripheral-wall section helically by winding, as shown in Figure 6, were proposed. It is possible in this way to obtain the adhesiveness between the external and internal peripheral-wall sections 121 and 122 made of the same rubber sufficiently high, to provide pressure resistance because of the presence of the mesh-like section 104 and the hard core-material section 103 and thus, to give a flexible pressure-resistant and oil-resistant hose 101 superior in durability.

However, rubber materials are heavier than synthetic resin materials, and the hose shown in Figure 6 having two layers of peripheral-wall sections 121 and 122 made of the rubber material is heavy, causing a need for reduction in weight for improvement of processability during transport and installation. In addition, a weather-resistant rubber material is needed for the external peripheral-wall section, which was a reason leading to increase in production cost.

Patent Document 1: JP-A No. 2005-155761
Patent Document 2: JP-A No. 2008-261485
Patent Document 3: JP-A No. 55-44187

### Summary of Invention

### Technical Problem

An object of the present invention, which was made to solve the problems above under the circumstances above, is to provide a flexible pressure-resistant and oil-resistant hose superior in durability and pressure resistance and favorably lighter and cost-effective.

### Solution to Problem

The present invention, which was made to solve the problems above, relates to a flexible pressure-resistant and oil-resistant hose, comprising a soft body section having a substantially flat internal surface and a helical hard core-material section formed on the outer surface or internally of the soft body section for reinforcement of the soft body section, wherein the soft body section is made of an oil-resistant thermoplastic elastomer.

Preferably in the flexible pressure-resistant and oil-resistant hose, a mesh-like section of multiple reinforcing fibers is formed in the soft body section and the hard core-material section is formed helically on the outer surface of the soft body section.

Specifically, it is favorable that the hard core-material section is made of a metal wire and formed on the outer surface of the soft body section, and an external coat layer of a thermoplastic elastomer is formed additionally on the outer surface.

It is also favorable that the hard core-material section is formed inside the soft body section and an internal coat layer similarly made of an oil-resistant thermoplastic elastomer is formed on the internal wall, covering the same.

### Advantageous Effects of Invention

With the flexible pressure-resistant and oil-resistant hose according to the present invention in the configuration above, it is possible to reduce the weight (by about 5 to 30% because of smaller specific density), compared to those made of conventional rubber because the soft body section is made of an oil-resistant thermoplastic elastomer, and to improve the processability (handling efficiency) during transport and installation. In addition, since the flexible pressure-resistant and oil-resistant hose is superior in weather resistance, there is no need for using a weather-resistant expensive rubber and for using a two-layer structure of rubber and resin layers and thus, it is possible to reduce the cost. Especially, when the hard core-material section is made of a metal wire, the resulting hose has antistatic effect additionally. It is also possible to produce a transparent main section, which could not be prepared with conventional rubber layer.

### Brief Description of the Drawings

Figure 1 is a partial broken side view illustrating the flexible pressure-resistant and oil-resistant hose in the first embodiment of the present invention.
Figure 2 is a partial broken side view illustrating the flexible pressure-resistant and oil-resistant hose in the second embodiment of the present invention.
Figures 3(a) and 3(b) are partial broken side views illustrating the flexible pressure-resistant and oil-resistant hose in the third embodiment of the present invention.
Figure 4 is a partial broken side view illustrating a conventional flexible pressure-resistant hose.
Figure 5 is a partial broken side view illustrating another conventional flexible pressure-resistant hose.
Figure 6 is a partial broken side view illustrating yet another conventional flexible pressure-resistant and oil-resistant hose.

### Reference Signs List

- 1: Flexible pressure-resistant and oil-resistant hose
- 2: Soft body section
- 3: Hard core-material section
- 4: Mesh-like section
- 6: External coat layer
- 7: Internal coat layer
- 20: Internal layer
- 21: External layer
- 30: Metal wire
- 31: Thermoplastic elastomer layer
- 51: Reinforcing fiber
- 52: Metal wire
- 101: Flexible pressure-resistant and oil-resistant hose /flexible pressure-resistant hose
- 102: Soft body section
- 103: Hard core-material section
- 104: Mesh-like section
- 121: Internal peripheral-wall section
- 122: External peripheral-wall section

### Description of Embodiments

Hereinafter, favorable embodiments of the present invention will be described in detail with reference to the drawings attached.

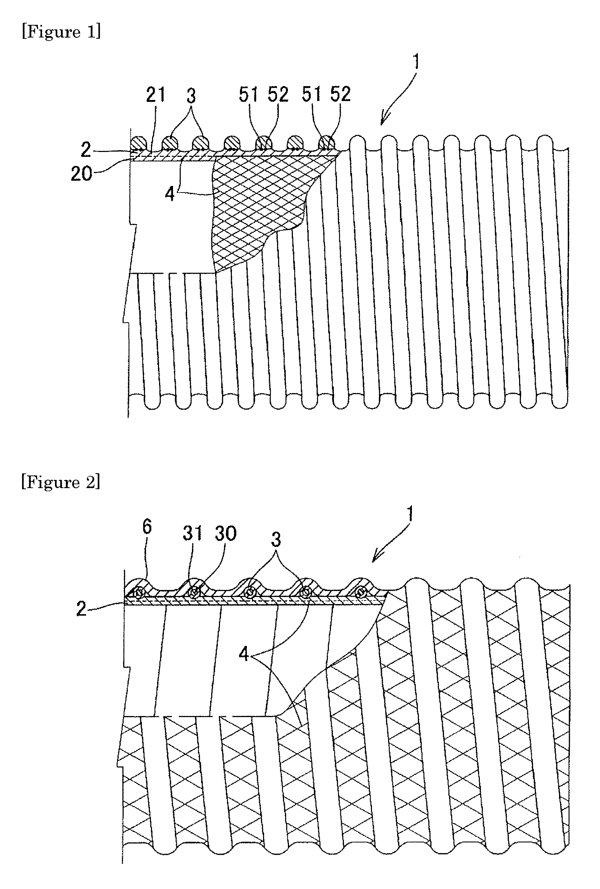

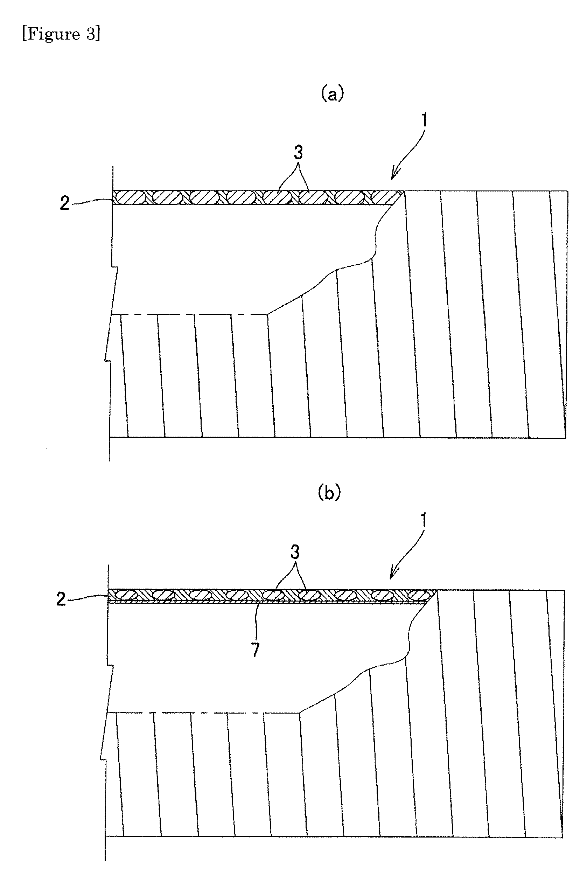

Figure 1 is a partial broken side view showing a first embodiment of the flexible pressure-resistant and oil-resistant hose according to the present invention, Figure 2 is that showing the second embodiment, and Figure 3 is that showing the third embodiment, wherein the numerical codes 1, 2, and 3 represent respectively a flexible pressure-resistant and oil-resistant hose, a soft body section, and a hard core-material section.

As shown in Figure 1, the flexible pressure-resistant and oil-resistant hose according to the present invention 1 is characterized by including a soft body section 2 having a substantially flat internal surface and a helical hard core-material section 3 formed on the outer surface or internally of the soft body section 2 for reinforcement of the soft body section 2, wherein the soft body section 2 is made of an oil-resistant thermoplastic elastomer.

Examples of the oil-resistant thermoplastic elastomers for use include thermoplastic elastomers superior in oil resistance, such as olefinic elastomers, acrylic olefin elastomers, polyamide-based elastomers, polyester-based elastomers, polyurethane-based elastomers and vinyl chloride-based elastomers. In addition, the oil-resistant thermoplastic elastomers additionally mixed with thermoplastic resins, such as a polypropylene resin and a polyethylene resin, may also be used.

As shown in Figure 1, the flexibility pressure- and oil-resistant hose 1 of the first embodiment has a hard core-material section 3 helically formed on the outer surface of the soft body section 2 of an oil resistance thermoplastic elastomer, and a mesh-like section 4 made of multiple reinforcing fibers, such as aramide fiber, vinylon fiber, nylon fiber or polyester fiber, formed on the internal surface of the soft body section 2 for increase of the theshold value against rupture of the hose by internal pressure. The hard core-material section 3 in the present embodiment is made of a hard synthetic resin such as a polyolefin resin, more preferably that containing a powdery or fibrous filler added for reinforcement. The polyolefin resin for use can be, for example, a polypropylene resin or a polyethylene resin.

The soft body section 2 having such a mesh-like section 4 has an internal layer 20 made of an oil-resistant thermoplastic elastomer, crossed filaments formed thereon as the mesh-like section 4, and an external layer 21 made similarly of an oil-resistant thermoplastic elastomer further thereon, and the hard core-material section 3 is formed, on the outer surface side of the external layer 21 by winding. The mesh-like section 4 for use may be any one of the materials used for conventional pressure-resistant hoses. In the present embodiment, a reinforcing fiber 51 and a metal wire 52 are formed helically, as they extend in parallel along the central area of the bottom surface of the hard core-material section 3. Therefore, it is possible to restrict outward expansion of the hose and in particular, the metal wire 52, when present, functions as an earth cable, providing antistatic effect. The metal wire 52 for use may be, for example, a steel wire or a copper wire and the fiber for use as the reinforcing fiber 5 may be a fiber similar to that used for the mesh-like section 4. Although both a reinforcing fiber 51 and a metal wire 52 are formed in the present embodiment, it is of course possible to form only one of them.

Hereinafter, the second embodiment of the present invention will be described with reference to Figure 2.

The flexible pressure-resistant and oil-resistant hose 1 of the present embodiment is the flexible pressure-resistant and oil-resistant hose, wherein the hard core-material section 3 is made of a metal wire and an external coat layer 6 made of a thermoplastic elastomer is additionally formed on the outer surface of the soft body section 2 having the hard core-material section 3 of the metal wire on the outer surface.

The metal wire for use may be, for example, a steel wire or a copper wire, and installation of such a metal wire provides antistatic effect. The hard core-material section 3 may be a bare wire of metal, but in the present embodiment, it is a coated wire having a thermoplastic elastomer layer 31 covering the outer surface of the metal wire 30. The presence of such a coated wire makes the thermoplastic elastomer layer 31 more compatible with each of the soft body section 2 and the external coat layer 6 made similarly of a thermoplastic elastomer and leads to improvement in adhesiveness thereof.

The thermoplastic elastomer used for the external coat layer 6 is preferably an abrasion-resistant thermoplastic elastomer, and examples thereof include mixtures of a hydrogenated polystyrene-based thermoplastic elastomer and a polyolefin resin, polyurethane-based thermoplastic elastomers, polyamide-based elastomers, polyester-based elastomers and the like. Examples of the hydrogenated polystyrene-based thermoplastic elastomers for use include styrene-ethylene butylene-styrene block copolymers and the like, and the polyolefin resin to be mixed is for example a polypropylene resin or a polyethylene resin. The external coat layer 6 may be made of a synthetic resin, such as polyolefin resin or polyvinyl chloride resin, instead of a thermoplastic elastomer.

Hereinafter, the third embodiment of the present invention will be described with reference to Figure 3.

As shown in Figure 3(a), the flexible pressure-resistant and oil-resistant hose 1 of the present embodiment has a soft body section 2 made of an oil-resistant thermoplastic elastomer and a hard core-material section 3 made of a hard synthetic resin, such as a polyolefin resin, formed in the soft body section 2. More specifically, it is a hose substantially flat on both faces thereof in which a soft body section 2 and a hard core-material section 3 each extend helically, as they have substantially the same thickness and are alternately connected to each other in the lengthwise direction. The hose in such a structure can be prepared by winding a tape for the soft body section 2 and a tape for the hard core-material section 3, which are formed by simultaneous continuous melt-extrusion, helically around a rotating shaft and thermal-bonding the tapes to each other sequentially. More specifically, it can be prepared by winding a composite tape consisting of a tape for the hard core-material section 3 and two halves of the tape for the soft body section 2 integrally molded to the hard core-material section 3 helically around a shaft and thermally bonding the two regions of the tape for soft body section 2 to each other sequentially.

Figure 3(b) shows an alternative embodiment in which an internal coat layer 7 similarly made of an oil-resistant thermoplastic elastomer is formed as to cover the internal surface. It is possible in the present embodiment to improve the oil resistance and the pressure resistance further, while restricting increase in weight. Particularly, in the structure shown in Figure 3(a) above, the region of the hard core-material section 3 is exposed to the internal surface, causing a concern about oil resistance, but the oil-resistant internal coat layer 7, when formed as in the present embodiment, eliminates the concern. It is also favorable to form an external coat layer superior in abrasion resistance.

### Examples

Hereinafter, the flexible pressure-resistant and oil-resistant hose according to the present invention (Example 1) described in Figure 1, the conventional flexible pressure-resistant and oil-resistant hose (Comparative Example 1) described in Figure 6, and the conventional flexible pressure-resistant hose (Comparative Example 2) described in Figure 4 were evaluated in oil-resistance immersion test, and the results obtained will be described.

Test pieces of the innermost layer (soft body section/internal peripheral-wall section) of each of the hoses of Example 1 and Comparative Examples 1 and 2 were prepared, and the resistances thereof to gasoline, kerosene, and machining oil were determined in the immersion test under the condition of a temperature of 22°C for 168 hours, according to the immersion method specified in JIS K6258: "Rubber, vulcanized or thermoplastic-Determination of the effect of liquids," and the change in mass between before and after the test was determined. The results of the change in mass of each of the test pieces are summarized in the following Table 1.

**[Table 1]**

| | Gasoline | Kerosene | Machining oil |
|---|---|---|---|
| Example 1 | -1% - 10% | 0% - 5% | -2% - 2% |
| Comparative Example 1 | -1% - 15% | 0% - 5% | -2% - 2% |
| Comparative Example 2 | -70% - -40% | 20% - 40% | 20% - 40% |

The results in Table 1 show that the sample obtained in Example 1 of the present invention has the oil resistance equivalent to that of the internal peripheral-wall section (oil-resistant rubber material) of the conventional flexible pressure-resistant and oil-resistant hose of Comparative Example 1, and can be used for transport of oily fluids. It was highly oil-resistant particularly to gasoline. The results also show that the conventional flexible pressure-resistant hose of Comparative Example 2 lacks oil resistance and cannot be used for transport of oily fluids.

Favorable embodiments of the present invention have been described above, but it should be understood that the present invention is not restricted by these embodiments at all and can be worked in various forms within the scope of the invention.

## Claims

1. A flexible pressure-resistant and oil-resistant hose, comprising:
a soft body section having a substantially flat internal surface; and
a helical hard core-material section formed on the outer surface or internally of the soft body section for reinforcement of the soft body section, wherein
the soft body section is made of an oil-resistant thermoplastic elastomer.

2. The flexible pressure-resistant and oil-resistant hose according to Claim 1, wherein
a mesh-like section of multiple reinforcing fibers is formed in the soft body section, and
the hard core-material section is formed helically on the outer surface of the soft body section.

3. The flexible pressure-resistant and oil-resistant hose according to Claim 1 or 2, wherein the hard core-material section is made of a metal wire and formed on the outer surface of the soft body section, and
an external coat layer of a thermoplastic elastomer is formed additionally on the outer surface.

4. The flexible pressure-resistant and oil-resistant hose according to Claim 1, wherein
the hard core-material section is formed inside the soft body section, and
an internal coat layer similarly made of an oil-resistant thermoplastic elastomer is formed on the internal wall, covering the same.
